# EUROPÄISCHE PATENTANMELDUNG

(11) **EP 1 878 560 A1**
(43) Veröffentlichungstag der Anmeldung: **16.01.2008**
(21) Anmeldenummer: 07111777.4
(22) Anmeldetag: 05.07.2007
(51) Int. Cl.: B29C 65/00, C08J 5/00

(54) **Kunststoff-Kautschuk-Verbundbauteil und dessen Herstellung**

(30) Priorität: 12.07.2006 EP 06117034
(71) Anmelder: BASF Aktiengesellschaft, 67056 Ludwigshafen (DE)
(72) Erfinder: Reil, Frank, 64342, Seeheim-Jugenheim (DE); Aumer, Bernhard, 66996, Fischbach (DE); Bohrmann, Gerhard, 67459, Böhl-Iggelheim (DE)

(57) **Zusammenfassung**

Die vorliegende Erfindung betrifft neue Kunststoff-Kautschuk Verbundbauteile bestehend aus einem Kautschukkern (1) und einem Kunststoffträger (2), dadurch gekennzeichnet, dass der Kern (1) mit einem Kunststoffring (3) umgeben ist, der wiederum mit dem Kunststoffträger(2) verschweißt ist; sowie Verfahren zur Herstellung dieser Verbundbauteile.

## Beschreibung

Die vorliegende Erfindung betrifft neue Kunststoff-Kautschuk Verbundbauteile - wie sie zur Schwingungsdämpfung beispielweise bei Aggregatelagern eingesetzt werden - sowie ein Verfahren zur Herstellung dieser Verbundbauteile.

Kautschuk Verbundbauteile werden seit vielen Jahren für Aggregatelager wie beispielsweise für Motorlager, Getriebelagern, Pendelstützen, und Stabillagern zur Schwingungsentkopplung eingesetzt. Traditionell werden Lager, die einen Metall - insbesondere einen Aluminiumträger - und einen Kautschukkern aufweisen, eingesetzt. Diese Lager werden zunehmend von Lagern ersetzt, in denen der Träger aus einem technischen Kunststoff besteht. Hierbei werden kautschukelastische Bauteile fest mit dem Trägermaterial verbunden, wobei der Kautschuk die Rolle der Dämpfung übernimmt und das Gehäuse(Träger)material das feste Verbindungselement zur Karosserie darstellt.

Bei den bisherigen Kunststoff-Kautschuk-Lagern werden die gleichen Verbindungsverfahren und Konstruktionen wie bei den Metall/Kautschuklagern verwendet.

Um die Kräfte in die Karosserie zu übertragen, ist eine hohe Festigkeit der Verbindung zwischen dem Kautschukkern und dem Trägerteil notwendig. Somit kommt der Verbindungstechnik der beiden - meist getrennt hergestellten Bauteilen - eine zentrale Bedeutung zu.

Um eine Verbindung zwischen dem Kautschukkern und einem Träger aus Kunststoff zu bekommen, wurde bisher ein Haftvermittler eingesetzt und/oder eine Vorbehandlung/Aktivierung der Kautschukoberfläche vorgenommen.

GB 691252 beschreibt die Oberflächenaktivierung des Kautschuk Teils mit Chlor oder Schwefelsäure, um die Haftung zu verbessern.

GB 2259185, US 5316739 und DE 69705556 beschreiben die Oberflächenaktivierung mit Niederdruckplasma und Atmosphärenplasma.

Alle diese Verfahren benötigen - um eine ausreichende Haftfestigkeit zu erzielen - zusätzlich einen Kleber (DE 68927276) oder Haftvermittler (GB 2259185 oder DE 19919573)

Bei speziellen Kautschuktypen wie EPDM und SBR Kautschuk kann ein direkter Verbund durch Anvulkanisieren von Kautschuk an einen Träger erfolgen (DE 19631893).

Hier ist der Kautschuk nur teilvernetzt. Im montierten Zustand wird durch Restvulkanisation eine effektive Haftung erzielt (DE 10223039).

Bei vielen Verbundbauteilen wie beispielsweise bei Stabillagern muss zudem eine Vorspannung auf den Kautschuk aufgebracht werden, um den Kautschuk immer auf Druck und nicht auf Zug-/Druck-Wechselbeanspruchung zu belassen. Dies kann u.a. durch Einpressen (kalibrieren) des Außenteils in eine Aufnahme (DE 10227978) erfolgen. Bisher wurden bei der Technik des Umbördelns und beim Einpressen stets Metallringe verwendet. Hierzu ist das Einvulkanisieren eines Metallringes in das Kautschukteil notwendig. Durch die unterschiedlichen Materialien (Kunststoff als Trägerwerkstoff und Metall als Klemmring) kann sich die Verbindung aufgrund der unterschiedlichen Wärmeausdehnungskoeffizienten und der Kriechneigung des Kunststoffes während der Gebrauchsdauer verschlechtern.

Der Erfindung liegt die Aufgabe zugrunde, ein kostengünstiges Kunststoff-VerbundBauteil für schwingungsdämpfende Anwendungen zu fertigen, welches ohne aufwendige Vorbehandlung eine sehr hohe Haftfestigkeit über die gesamte Lebensdauer erzielt und idealerweise eine Vorspannung auf den Kautschuk aufbringt.

Überraschenderweise wurde nun ein Verbundbauteil mit einem Kautschukkern und einem Kunststoffträger gefunden, das die Aufgabe dadurch löst, dass der Herstellung des Kautschukkerns durch Vulkanisation ein Kunststoffring mit einvulkanisiert wird, der den Kautschukkern umschließt. Der mit dem Kunststoffring umfasste Kautschukkern wird dann in den Kunststoffträger zu einer dauerhaften Verbindung eingeschweißt. In einer bevorzugten Ausführungsform wird die Vorspannung des Kautschuks während der Verschweißung erzielt, indem der Kunststoffring geschlitzt ist und ein Übermaß zur Aussparung des Trägers aufweist. Beim Verschweißen wird der Kunststoffring definiert bis auf Anschlag gebracht und so auch der Kautschuk definiert vorgespannt.

Bei der vorliegenden Erfindung wird der Kunststoffring mit einem Haftvermittler versehen und im Vulkanisationswerkzeug mit dem Kautschuk verbunden. Der Haftvermittler kann ein handelsübliches Sprühsystem oder ein spritzgießbarer Werkstoff wie ein thermoplastisches Elastomer sein (beispielsweise ein TPE-U oder TPE-E). Der Kunststoffring kann auch nach der Vulkanisation des Kautschukkerns in einem separaten Werkzeug angespritzt werden.

Die separate Herstellung des Kautschuk-Kerns mit einem Kunststoffring hat einen zusätzlichen Vorteil. Die im Vergleich zu Herstellung des gesamten Lagers benötigte, kleinere Bauform lässt es zu, mehr Bauteile in einem Arbeitsgang bei gleicher Werkzeuggröße zu fertigen.

Der so hergestellte Kautschukkern mit einer Kunststoffaußenhülse kann dann mit dem Kunststoffträger verschweißt werden. Als Schweißverfahren kommen alle bekannten Schweißverfahren wie Laserschweißen, Reibschweißen, Rotationschweißen, Ultraschallschweißen oder Heizspiegelschweißen in Betracht (s. DVS Verlag Reihe 2205, 2207, 2208; Schweißen von thermoplastischen Kunststoffen, DIN 16960 Blatt1: Schweißen von thermoplastischen Kunststoffen). Vorteilhaft erscheint jedoch das Rotationsschweißen da die Bauteile im allgemeinen rotationssymmetrisch sind.

Vorzugsweise weist der Kunststoffring (3) beim Einlegen in die Vulkanisationsform eine Aussparung (3a) auf oder wird nach dem Vulkanisieren geschlitzt. Der Außendurchmesser des umbördelten Kautschukkerns ist größer als der Innendurchmesser des Trägerteils, wodurch eine Überdeckung/ein Übermaß entsteht. Das Übermaß beträgt vorzugsweise 0,1. bis 5 % des Umfangs. Beim Fügevorgang/Schweißvorgang kann der Kunststoffring zusammengedrückt werden und staucht somit das Kautschukbauteil und bringt die gewünschte Vorspannung auf.

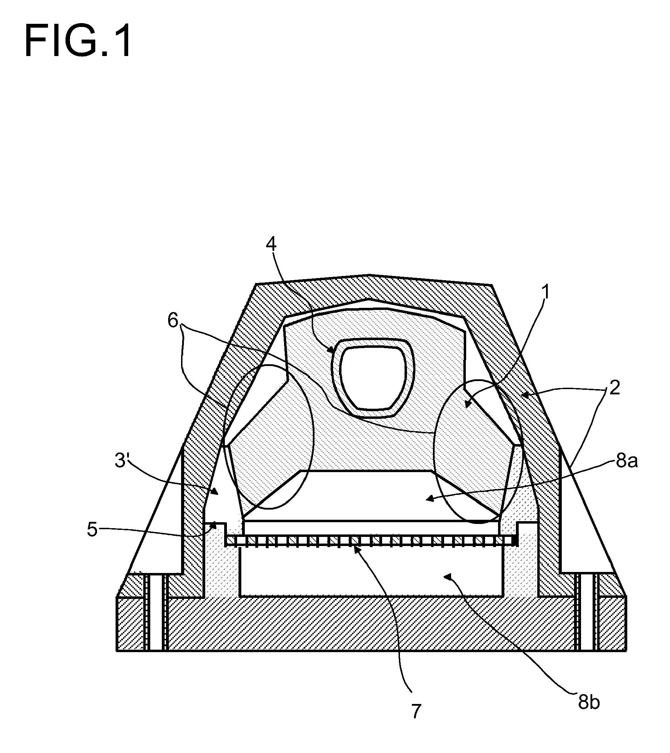

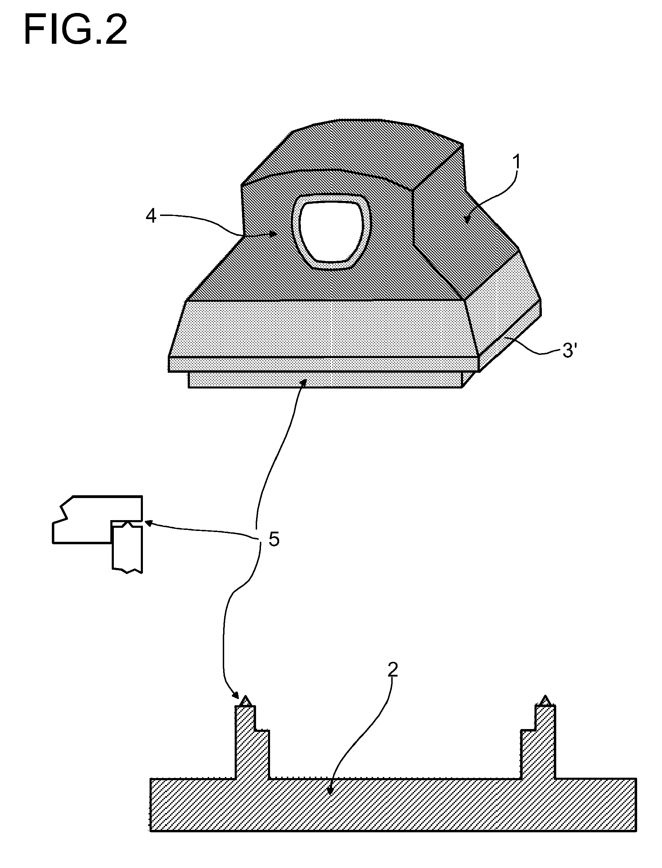

Die stoffschlüssige Verbindung zwischen Kunststoffring und Kunststoffträger bringt eine bekannt große Verbindungsfestigkeit auf und zeigt keine Probleme hinsichtlich unterschiedlicher Wärmeausdehnungskoeffizienten. Der Kunststoffring (3) kann andere geometrische Formen als einen Ring aufweisen. Ringe werden insbesondere bei Pendelstützen verwendet. Als Beispiel für andere Formen, die der Kunststoffring (3) aufweisen kann, dient der in den Abbildungen 1 und 2 dargestellte Kunststoffrand (3').

Kunststoffring (3) bzw. Kunststoffrand (3') weisen in der Regel eine Dicke von 1 bis 10 mm und vorzugsweise eine Dicke von 3 bis 5 mm auf.

Kunststoffring und Träger bestehen unabhängig voneinander in der Regel aus Polyamid, Polyester, Polyacetal, Polysulfon, Polyolefin. Vorzugsweise werden faserverstärktes Polyamid 6 oder Polyamid 6,6 eingesetzt.. In der Regel sind die für Ring und Träger verwendeten Kunststoffe beim Verschmelzen miteinander kompatibel. Insbesondere bevorzugt sind Lager, bei denen Ring und Träger aus dem gleichen Kunststoff gefertigt sind.

Insbesondere kann die erfindungsgemäße Verbindungstechnik zur Herstellung von Hydrolagern verwendet werden. Im Allgemeinen bestehen Hydrolager aus einer bis zwei Tragfedern und zwei Kammern. Die beiden mit viskoser Flüssigkeit gefüllten Kammern sind durch elastische Wände abgetrennt und über einen Strömungskanal miteinander verbunden. Weitere Angaben zu Hydrolagern finden sich in "Fahrwerktechnik für PKW", Lemförder Fahrwerktechnik, Verlag Moderne Industrie ISBN 3-478-93303. Hydrolager weisen häufig das Problem auf, dass die Flüssigkeitskammern unter Belastung undicht werden. Die einfache und effiziente erfindungsgemäße Verbindungstechnik von Kunststoffring und Kunststoffträger insbesondere durch Verschweißen löst dieses Problem auf sehr einfache und effiziente Weise.

In den Abbildungen 1 bis 4 werden folgende Ausführungsbeispiele näher erläutert:

### Liste der Bezugszeichen:

- 1: Kautschukkern
- 2: Kunststoffträger
- 3: Kunststoffring
- 3': Kunststoffrand
- 3a: Aussparung
- 4: Metallhülse
- 5: Schweißnaht
- 6: Tragfeder
- 7: Strömungskanal
- 8a: Kammer a
- 8b: Kammer b

In Abbildung 1 ist ein Motorlager als Hydrolager schematisch dargestellt.
Beim beschriebenen Zweikammer-Hydrolager sind die zwei Hohlkammern über eine Zwischenplatte mit einem Strömungskanal 7 verbunden. Die Wand der einen Hohlkammer 8a ist die eigentliche Tragfeder 6 und hat unter anderem die Funktion, die statische Last aufzunehmen. Die zweite Kammer8b ist volumenweich ausgeführt und dient lediglich dazu, bei Bewegung der Tragfeder die verdrängte Flüssigkeit ohne nennenswerten Gegendruck aufzunehmen.

In Abbildung 2 wird der Kautschukkern (1) mit Kunststoffrand (3') im Detail dargestellt. Der Kunststoffrand (3') wird in das Vulkanisationswerkzeug eingelegt. Nach der Vulkanisation besteht eine feste Verbindung zwischen dem Kautschukkern (1) und dem Kunststoffrand (3'). Für die feste Verbindung kann ein Haftvermittler verwendet werden. Der Kunststoffrand (3') ist im Bereich der späteren Verschweißung mit einer Schweißnahtgeometrie - wie beispielsweise in (5) abgebildet - versehen. Bei der Verschweißung eines Hydrolagers ist darauf zu achten, dass beim Verschweißen kein Schmelzeaustrieb in den inneren Bereich des Lagers gelangt. Die beiden Teile - Kunststoffrand (3') und Kunststoffträger (2) - werden vorzugsweise mit Vibrations/Reibschweißen miteinander verbunden, um eine ausreichende Festigkeit zu bekommen. Der verwendete Kunststoff muss eine ausreichende Hydrolysebeständigkeit und niedrige Permetationsrate gegenüber dem Hydrolager-Fluid aufweisen. Eine Metallhülse (4) im Kautschukkern wird benötigt, um über diesen Verschraubungspunkt die Kraft in das Bauteil einzuleiten.

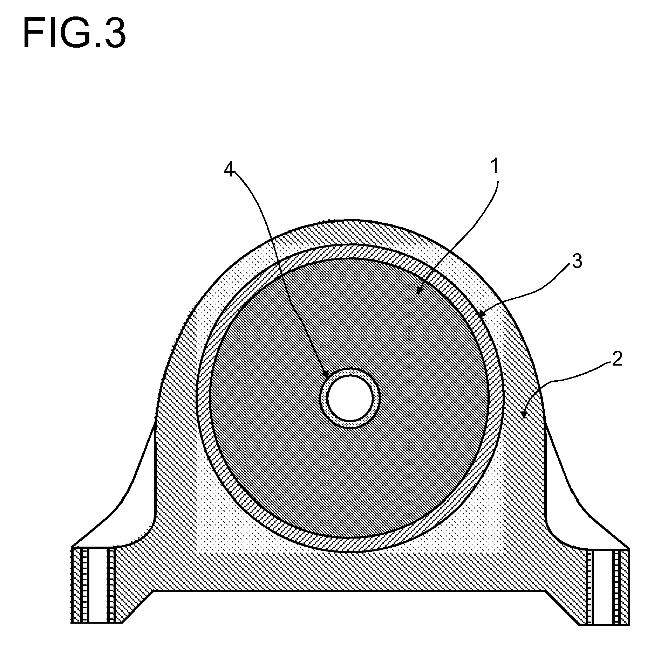

Abbildung 3 stellt eine Pendelstütze dar.

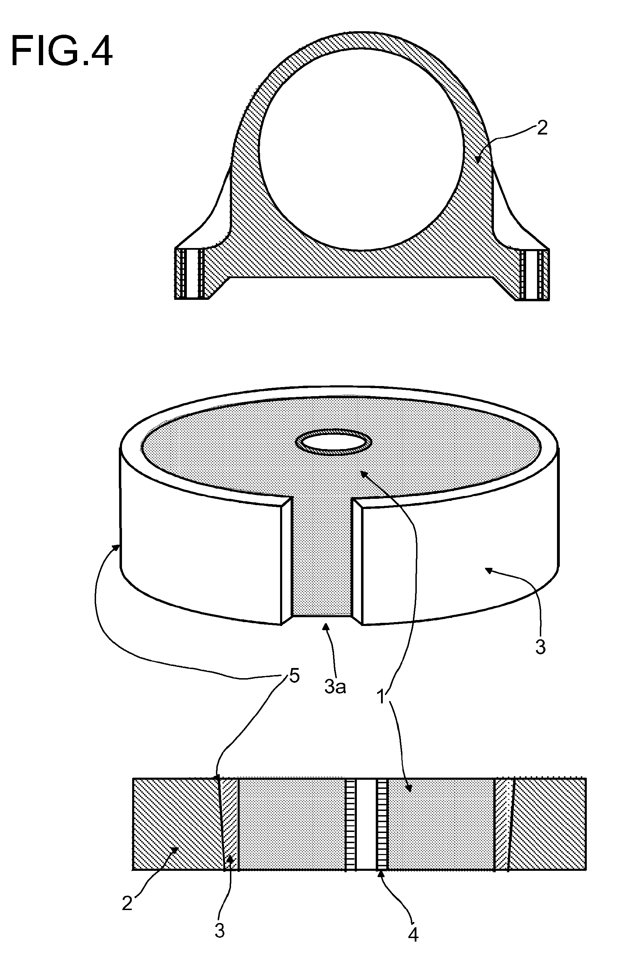

In Abbildung 4 ist der Kautschukkern (1) mit Kunststoffring (3) einer Pendelsstütze abgebildet. Der Kunststoffring (3) wird in das Vulkanisationswerkzeug eingelegt. Nach der Vulkanisation besteht eine feste Verbindung zwischen dem Kautschukkern (1) und dem Kunststoffring (3). Für die feste Verbindung kann ein Haftvermittler verwendet werden. Der Kunststoffring (3) kann geschlossen oder mit einer Aussparung (3a) versehen sein. Die Aussparung (3a) kann auch nach der Vulkanisation mechanisch eingebracht werden. Der Kunststoffring ist mit einer Schweißnahtgeometrie wie beispielsweise einer Steilkegelnaht (5) versehen. Diese kann am Umfang oder über einen Bund an der Stirnfläche angebracht sein. Der Kautschukkern inklusive Ring wird bei dieser Ausführungsform vorteilhaft über Rotationsschweißen in den Träger (2) eingeschweißt.

## Patentansprüche

1. Kunststoff-Kautschuk Verbundbauteil bestehend aus einem Kautschukkern (1) und einem Kunststoffträger (2), **dadurch gekennzeichnet, dass** der Kern (1) mit einem Kunststoffring (3) umgeben ist, der wiederum mit dem Kunststoffträger(2) verschweißt ist.

2. Motorlager nach Anspruch 1, wobei als Kunststoffring ein Kunststoffrand 3' verwendet wird.

3. Hydrolager nach Anspruch 2.

4. Pendelstütze nach Anspruch 1.

5. Verfahren zur Herstellung eines Kunststoff-Kautschuk-Verbundbauteils bestehend aus einem Kautschukkern (1) und einem Kunststoffträger (2), **dadurch gekennzeichnet, dass** der Kern (1) während des Vulkanisieren mit einem Kunststoffring (3) verbunden wird, und in einem anschließenden Schritt mit dem Kunststoffträger (2) verschweißt wird.

6. Verfahren nach Anspruch 5, **dadurch gekennzeichnet, dass** der Kunststoffring (3) mit einer Schweißnahtgeometrie versehen ist.

7. Verfahren nach Anspruch 5, **dadurch gekennzeichnet, dass** der Kunststoffring (3) beim Einlegen in die Vulkanisationsform bereits eine Aussparung aufweist (3a) oder nach dem Vulkanisieren geschlitzt wird, wodurch ein außenliegender Kunststoffring entsteht, der gegenüber dem Innendurchmesser des Trägers (2) eine Überdeckung aufweist und beim anschließenden Schweißvorgang eine Vorspannung auf den Kautschukkern (1) aufbringt.

8. Verfahren nach Anspruch 5, **dadurch gekennzeichnet, dass** die Verbindung zwischen Kunststoffring (3) und Kern (1) mittels eines Haftvermittlers verbessert wird.
